(19) Europäisches Patentamt
European Patent Office
Office européen des brevets

(11) EP 3 904 455 A1

(12) EUROPEAN PATENT APPLICATION
published in accordance with Art. 153(4) EPC

(43) Date of publication:
**03.11.2021 Bulletin 2021/44**

(21) Application number: **19901687.4**

(22) Date of filing: **16.12.2019**

(51) Int Cl.:
***C08L 69/00*** *(2006.01)* ***C08L 55/02*** *(2006.01)*
***C08L 25/10*** *(2006.01)* ***C08L 67/02*** *(2006.01)*
***C08F 285/00*** *(2006.01)* ***C08F 279/02*** *(2006.01)*
***C08K 3/22*** *(2006.01)* ***C08K 5/49*** *(2006.01)*
***C08K 5/524*** *(2006.01)*

(86) International application number:
**PCT/KR2019/017783**

(87) International publication number:
**WO 2020/138802 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **28.12.2018 KR 20180172708**

(71) Applicant: **Lotte Chemical Corporation**
**Seoul, 05551 (KR)**

(72) Inventors:
- **LEE, Jin Seong**
  **Uiwang-Si Gyeonggi-do 16073 (KR)**
- **OH, Hyun Ji**
  **Uiwang-Si Gyeonggi-do 16073 (KR)**
- **JEONG, Hyun Taek**
  **Uiwang-Si Gyeonggi-do 16073 (KR)**
- **HEO, Jun Hyuk**
  **Uiwang-Si Gyeonggi-do 16073 (KR)**
- **KWON, Young Chul**
  **Uiwang-Si Gyeonggi-do 16073 (KR)**

(74) Representative: **Germain Maureau**
**12, rue Boileau**
**69006 Lyon (FR)**

# (54) THERMOPLASTIC RESIN COMPOSITION AND MOLDED ARTICLE THEREFROM

(57) A thermoplastic resin composition according to the present invention comprises: about 100 parts by weight of a thermoplastic resin comprising about 30 to about 60 wt% of a rubber-modified aromatic vinyl-based copolymer resin, about 30 to about 60 wt% of a polycarbonate resin, and about 5 to about 25 wt% of a polyester resin; about 0.1 to about 5 parts by weight of zinc oxide; about 0.1 to about 3 parts by weight of a phosphite compound comprising at least one type from among a phosphite compound represented by chemical formula 1 and a phosphite compound represented by chemical formula 2; and about 5 to about 30 parts by weight of a phosphorus-based flame retardant. The thermoplastic resin composition has excellent hydrolysis resistance, flame retardancy, and impact resistance, excellent balance of the foregoing physical properties, and the like.



Printed by Jouve, 75001 PARIS (FR)

**Description**

[Technical Field]

The present invention relates to a thermoplastic resin composition and a molded article produced therefrom. More particularly, the present invention relates to a thermoplastic resin composition that exhibits good properties in terms of hydrolysis resistance, flame retardancy, impact resistance, and property balance therebetween, and a molded article produced therefrom.

[Background Art]

A thermoplastic resin composition including a polycarbonate resin, a rubber-modified aromatic vinyl copolymer resin and a flame retardant has good properties in terms of impact resistance, flame retardancy, processability, and the like to be advantageously applied to housings of electric/electronic products and interior and exterior materials for office automation devices, which generate a large quantity of heat.

However, a thermoplastic resin composition including a polycarbonate resin and a rubber-modified aromatic vinyl copolymer resin has a problem in application to products requiring 5VA flame retardancy. Accordingly, although various studies have been made to improve characteristics for 5VA flame retardancy through addition of a polyester resin, addition of the polyester resin causes a problem of deterioration in hydrolysis resistance and the like.

Therefore, there is a need for development of a thermoplastic resin composition having good properties in terms of hydrolysis resistance, flame retardancy, impact resistance, and property balance therebetween.

The background technique of the present invention is disclosed in US Patent No. 5,061,745 and the like.

[Disclosure]

[Technical Problem]

It is one object of the present invention to provide a thermoplastic resin composition that exhibits good properties in terms of hydrolysis resistance, flame retardancy, impact resistance, and property balance therebetween.

It is another object of the present invention to provide a molded article produced from the thermoplastic resin composition.

The above and other objects of the present invention can be achieved by the present invention described below.

[Technical Solution]

1. One aspect of the present invention relates to a thermoplastic resin composition. The thermoplastic resin composition includes: about 100 parts by weight of a thermoplastic resin including about 30 wt% to about 60 wt% of a rubber-modified aromatic vinyl copolymer resin, about 30 wt% to about 60 wt% of a polycarbonate resin, and about 5 wt% to about 25 wt% of a polyester resin; about 0.1 to about 5 parts by weight of zinc oxide; about 0.1 to about 3 parts by weight of a phosphite compound including at least one of a phosphite compound represented by Formula 1 and a phosphite compound represented by Formula 2; and about 5 to about 30 parts by weight of a phosphorus flame retardant.

[Formula 1]

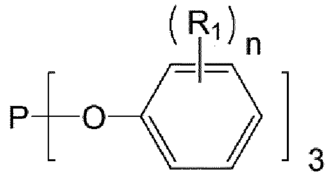

where $R_1$ is a linear or branched $C_1$ to $C_{10}$ alkyl group and n is an integer of 1 to 5;

[Formula 2]

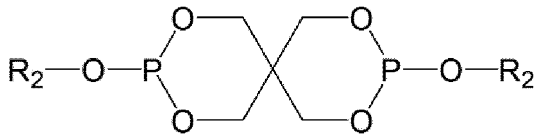

where $R_2$ is a linear or branched $C_{10}$ to $C_{30}$ alkyl group or a $C_6$ to $C_{30}$ aryl group.

2. In Embodiment 1, the rubber-modified aromatic vinyl copolymer resin may include a rubber-modified vinyl graft copolymer and an aromatic vinyl copolymer resin.

3. In Embodiment 1 or 2, the rubber-modified vinyl graft copolymer may be prepared through graft polymerization of a monomer mixture including an aromatic vinyl monomer and a vinyl cyanide monomer to a rubber polymer.

4. In Embodiments 1 to 3, the polyester resin may include at least one of polyethylene terephthalate (PET), polybutylene terephthalate (PBT), polyethylene naphthalate (PEN), polytrimethylene terephthalate (PTT), and polycyclohexylene terephthalate (PCT).

5. In Embodiments 1 to 4, the phosphite compound may include at least one of a compound represented by Formula 1a, a compound represented by Formula 2a, and a compound represented by Formula 2b.

[Formula 1a]

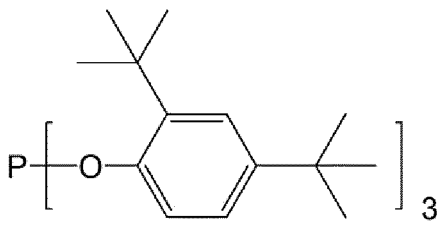

[Formula 2a]

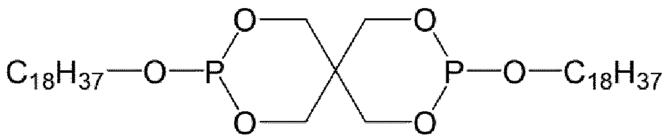

[Formula 2b]

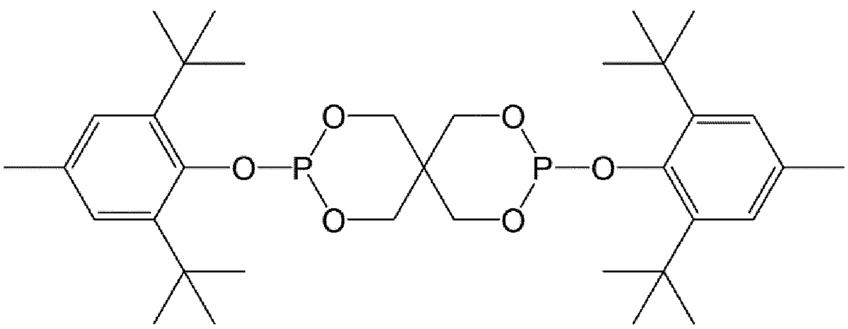

6. In Embodiments 1 to 5, the phosphorus flame retardant may include at least one of a phosphate compound, a phosphonate compound, a phosphinate compound, a phosphine oxide compound, and a phosphazene compound.

7. In Embodiments 1 to 6, the thermoplastic resin composition may include at least one of a halogen flame retardant and an antimony flame retardant.

8. In Embodiments 1 to 7, the zinc oxide and the phosphite compound may be present in a weight ratio of about 1:1 to about 4:1.

9. In Embodiments 1 to 8, the thermoplastic resin composition may have a flame retardancy of 5VA, as measured on an injection-molded 2.5 mm thick specimen by a UL-94 vertical test method.

10. In Embodiments 1 to 9, the thermoplastic resin composition may have a flame retardancy of 5VA, as measured on an injection-molded 2.5 mm thick specimen by a UL-94 vertical test method after the specimen is exposed in a chamber under conditions of 70°C and 95% RH (relative humidity) for 300 hours and is left for aging under conditions of room temperature and 50% RH for 24 hours.

11. In Embodiments 1 to 10, the thermoplastic resin composition may have a notched Izod impact strength of about 20 kgf cm/cm to about 60 kgf·cm/cm, as measured on a 1/8" thick specimen in accordance with ASTM D256.

12. In Embodiments 1 to 11, the thermoplastic resin composition may have an impact strength retention rate of about 85% or more, as calculated by Equation 1:

[Equation 1]

$$\text{Impact strength retention rate (\%)} = (IZ_1/IZ_0) \times 100$$

where IZo denotes a notched Izod impact strength, as measured on an injection-molded 1/8" thick specimen in accordance with ASTM D256, and $IZ_1$ denotes a notched Izod impact strength, as measured on the specimen in accordance with ASTM D256 after the specimen is exposed in a chamber under conditions of 70°C and 95% RH for 300 hours and is left for aging under conditions of room temperature and 50% RH for 24 hours.

13. Another aspect of the present invention relates to a molded article. The molded article is produced from the thermoplastic resin composition according to any one of Embodiments 1 to 12.

[Advantageous Effects]

The present invention provides a thermoplastic resin composition that has good properties in terms of hydrolysis resistance, flame retardancy, impact resistance and property balance therebetween, and a molded article produced therefrom.

[Best Mode]

Hereinafter, embodiments of the present invention will be described in detail.
A thermoplastic resin composition according to the present invention includes:
(A) a rubber-modified aromatic vinyl copolymer resin; (B) a polycarbonate resin; (C) a polyester resin; (D) zinc oxide; (E) a phosphite compound; and (F) a phosphorus flame retardant.
As used herein to represent a specific numerical range, the expression "a to b" means "≥ a and ≤ b".

(A) Rubber-modified aromatic vinyl copolymer resin

A rubber-modified aromatic vinyl copolymer resin according to one embodiment of the present invention may include (A1) a rubber-modified vinyl graft copolymer and (A2) an aromatic vinyl copolymer resin.

(A1) Rubber-modified vinyl graft copolymer

The rubber-modified vinyl graft copolymer according to the embodiment of the present invention may be obtained through graft polymerization of a monomer mixture including an aromatic vinyl monomer and a vinyl cyanide monomer to a rubber polymer. For example, the rubber-modified vinyl graft copolymer may be obtained through graft polymerization of the monomer mixture including the aromatic vinyl monomer and the vinyl cyanide monomer to the rubber polymer

and, optionally, the monomer mixture may further include a monomer for imparting processability and heat resistance. Here, polymerization may be performed by any suitable polymerization method known in the art, such as emulsion polymerization, suspension polymerization, and the like. Further, the rubber-modified vinyl graft copolymer may have a core-shell structure in which the rubber polymer constitutes the core and a copolymer of the monomer mixture constitutes the shell, without being limited thereto.

In some embodiments, the rubber polymer may include diene rubbers, such as polybutadiene, poly(styrene-butadiene), and poly(acrylonitrile-butadiene), saturated rubbers obtained by adding hydrogen to the diene rubbers, isoprene rubbers, $C_2$ to $C_{10}$ alkyl (meth)acrylate rubbers, copolymers of $C_2$ to $C_{10}$ alkyl (meth)acrylate rubbers and styrene, and ethylene-propylene-diene terpolymer (EPDM), and the like. These may be used alone or as a mixture thereof. For example, the rubber polymer may include diene rubbers, (meth)acrylate rubbers, specifically butadiene rubbers, butyl acrylate rubbers, and the like.

In some embodiments, the rubber polymer (rubber particles) may have an average (z-average) particle diameter of about 0.05 μm to about 6 μm, for example, about 0.15 μm to about 4 μm, specifically about 0.25 μm to about 3.5 μm. Within this range, the thermoplastic resin composition can have good impact resistance and appearance characteristics. Here, the average (Z-average) particle diameter of the rubber polymer (rubber particles) may be measured by a light scattering method in a latex state. Specifically, a rubber polymer latex is filtered through a mesh to remove coagulum generated during polymerization of the rubber polymer. Then, a mixed solution of 0.5 g of the latex and 30 ml of distilled water is placed in a 1,000 ml flask, which in turn is filled with distilled water to prepare a specimen. Then, 10 ml of the specimen is transferred to a quartz cell, followed by measurement of the average particle diameter of the rubber polymer using a light scattering particle analyzer (Malvern Co., Ltd., Nano-zs).

In some embodiments, the rubber polymer may be present in an amount of about 20 wt% to about 70 wt%, for example, about 25 wt% to about 60 wt%, based on 100 wt% of the rubber-modified vinyl graft copolymer, and the monomer mixture (including the aromatic vinyl monomer and the vinyl cyanide monomer) may be present in an amount of about 30 wt% to about 80 wt%, for example, about 40 wt% to about 75 wt%, based on 100 wt% of the rubber-modified vinyl graft copolymer. Within this range, the thermoplastic resin composition can have good properties in terms of impact resistance, appearance characteristics, and the like.

In some embodiments, the aromatic vinyl monomer may be graft copolymerizable with the rubber polymer and may include, for example, styrene, α-methylstyrene, β-methylstyrene, p-methylstyrene, p-t-butylstyrene, ethylstyrene, vinylxylene, monochlorostyrene, dichlorostyrene, dibromostyrene, vinyl naphthalene, and the like. These may be used alone or as a mixture thereof. The aromatic vinyl monomer may be present in an amount of about 10 wt% to about 90 wt%, for example, about 40 wt% to about 90 wt%, based on 100 wt% of the monomer mixture. Within this range, the thermoplastic resin composition can have good properties in terms of processability, impact resistance, and the like.

In some embodiments, the vinyl cyanide monomer is a monomer copolymerizable with the aromatic vinyl monomer and may include, for example, acrylonitrile, methacrylonitrile, ethacrylonitrile, phenyl acrylonitrile, α-chloroacrylonitrile, and fumaronitrile, without being limited thereto. These may be used alone or as a mixture thereof. For example, the vinyl cyanide monomer may be acrylonitrile, methacrylonitrile, and the like. The vinyl cyanide monomer may be present in an amount of about 10 wt% to about 90 wt%, for example, about 10 wt% to about 60 wt%, based on 100 wt% of the monomer mixture. Within this range, the thermoplastic resin composition can have good properties in terms of chemical resistance, mechanical properties, and the like.

In some embodiments, the monomer for imparting processability and heat resistance may include, for example, (meth)acrylic acid, maleic anhydride, and N-substituted maleimide, without being limited thereto. The monomer for imparting processability and heat resistance may be present in an amount of about 15 wt% or less, for example, about 0.1 wt% to about 10 wt%, based on 100 wt% of the monomer mixture. Within this range, the monomer for imparting processability and heat resistance can impart processability and heat resistance to the thermoplastic resin composition without deterioration in other properties.

In some embodiments, the rubber-modified vinyl graft copolymer may include a copolymer (g-ABS) obtained by grafting a styrene monomer as the aromatic vinyl compound and an acrylonitrile monomer as the vinyl cyanide compound to a butadiene rubber polymer, a copolymer (g-MBS) obtained by grafting a styrene monomer as the aromatic vinyl compound and methyl methacrylate as the monomer copolymerizable therewith to a butadiene rubber polymer, an acrylate-styreneacrylonitrile graft copolymer (g-ASA) obtained by grafting a styrene monomer as the aromatic vinyl compound and an acrylonitrile monomer as the vinyl cyanide compound to a butyl acrylate rubber polymer, and the like.

In some embodiments, the rubber-modified vinyl graft copolymer may be present in an amount of about 20 wt% to about 50 wt%, for example, about 25 wt% to about 45 wt%, based on 100 wt% of the rubber-modified aromatic vinyl copolymer resin. Within this range, the thermoplastic resin composition can exhibit good properties in terms of impact resistance, fluidity (molding processability), appearance characteristics, and property balance therebetween.

(A2) Aromatic vinyl copolymer resin

The aromatic vinyl copolymer resin according to one embodiment of the present invention may include an aromatic vinyl copolymer resin used in typical rubber-modified aromatic vinyl copolymer resins. For example, the aromatic vinyl copolymer resin may be a polymer of a monomer mixture including an aromatic vinyl monomer and a monomer copolymerizable with the aromatic vinyl monomer.

In some embodiments, the aromatic vinyl copolymer resin may be obtained by mixing the aromatic vinyl monomer with the monomer copolymerizable with the aromatic vinyl monomer, followed by polymerization of the mixture. Here, polymerization may be performed by any suitable polymerization method known in the art, such as emulsion polymerization, suspension polymerization, bulk polymerization, and the like.

In some embodiments, the aromatic vinyl monomer may include styrene, $\alpha$-methylstyrene, $\beta$-methylstyrene, p-methylstyrene, p-t-butylstyrene, ethylstyrene, vinylxylene, monochlorostyrene, dichlorostyrene, dibromostyrene, and vinyl naphthalene, without being limited thereto. These may be used alone or as a mixture thereof. The aromatic vinyl monomer may be present in an amount of about 20 wt% to about 90 wt%, for example, about 30 wt% to about 80 wt%, based on 100 wt% of the aromatic vinyl copolymer resin. Within this range, the thermoplastic resin composition can have good properties in terms of impact resistance and fluidity.

In some embodiments, the monomer copolymerizable with the aromatic vinyl monomer may include at least one of a vinyl cyanide monomer and an alkyl (meth)acrylic monomer. For example, the monomer copolymerizable with the aromatic vinyl monomer may include a vinyl cyanide monomer or a mixture of a vinyl cyanide monomer and an alkyl (meth)acrylic monomer, specifically a mixture of a vinyl cyanide monomer and an alkyl (meth)acrylic monomer.

In some embodiments, the vinyl cyanide monomer may include acrylonitrile, methacrylonitrile, ethacrylonitrile, phenyl acrylonitrile, $\alpha$-chloroacrylonitrile, and fumaronitrile, without being limited thereto. These may be used alone or as a mixture thereof. For example, the vinyl cyanide monomer may include acrylonitrile, methacrylonitrile, and the like.

In some embodiments, the alkyl (meth)acrylic monomer may include (meth)acrylic acid and/or a $C_1$ to $C_{10}$ alkyl (meth)acrylate. These may be used alone as a mixture thereof. For example, the alkyl (meth)acrylic monomer may be methyl methacrylate, methyl acrylate, and the like.

In some embodiments, when the monomer copolymerizable with the aromatic vinyl monomer is a mixture of a vinyl cyanide monomer and an alkyl (meth)acrylic monomer, the vinyl cyanide monomer may be present in an amount of 1 wt% to 40 wt%, for example, 2 wt% to 35 wt%, based on 100 wt% of the monomer copolymerizable with the aromatic vinyl monomer, and the alkyl (meth)acrylic monomer may be present in an amount of about 60 wt% to about 99 wt%, for example, about 65 wt% to about 98 wt%, based on 100 wt% of the monomer copolymerizable with the aromatic vinyl monomer. Within this range, the thermoplastic resin composition can exhibit good properties in terms of transparency, heat resistance, processability, and the like.

In some embodiments, the monomer copolymerizable with the aromatic vinyl monomer may be present in an amount of about 10 wt% to about 80 wt%, for example, about 20 wt% to about 70 wt%, based on 100 wt% of the aromatic vinyl copolymer resin. Within this range, the thermoplastic resin composition can have good properties in terms of impact resistance, fluidity, and the like.

In some embodiments, the aromatic vinyl copolymer resin may have a weight average molecular weight (Mw) of about 10,000 g/mol to about 300,000 g/mol, for example, about 15,000 g/mol to about 150,000 g/mol, as measured by gel permeation chromatography (GPC). Within this range, the thermoplastic resin composition can have good mechanical strength, moldability, and the like.

In some embodiments, the aromatic vinyl copolymer resin may be present in an amount of about 50 wt% to about 80 wt%, for example, about 55 wt% to about 75 wt%, based on 100 wt% of the rubber-modified aromatic vinyl copolymer resin. Within this range, the thermoplastic resin composition can exhibit good properties in terms of impact resistance, fluidity (molding processability), , and the like.

In some embodiments, the rubber-modified aromatic vinyl copolymer resin (A) may be present in an amount of about 30 wt% to about 60 wt%, for example, about 35 wt% to about 55 wt%, specifically about 40 wt% to about 50 wt%, based on 100 wt% of the thermoplastic resin (including the rubber-modified aromatic vinyl copolymer resin (A), the polycarbonate resin (B), and the polyester resin (C)). If the content of the rubber-modified aromatic vinyl copolymer resin is less than about 30 wt%, the thermoplastic resin composition can suffer from deterioration in impact resistance and hydrolysis resistance, and if the content of the rubber-modified aromatic vinyl copolymer resin exceeds about 60 wt%, the thermoplastic resin composition can suffer from deterioration in flame retardancy, fluidity, and the like.

(B) Polycarbonate resin

The polycarbonate resin according to one embodiment of the present invention may include any polycarbonate resin used in typical thermoplastic resin compositions. For example, the polycarbonate resin may be an aromatic polycarbonate resin prepared by reacting diphenols (aromatic diol compounds) with a precursor, such as phosgene, halogen

formate, or carbonate diester.

In some embodiments, the diphenols may include, for example, 4,4'-biphenol, 2,2-bis(4-hydroxyphenyl)propane, 2,4-bis(4-hydroxyphenyl)-2-methylbutane, 1,1-bis(4-hydroxyphenyl)cyclohexane, 2,2-bis(3-chloro-4-hydroxyphenyl)propane, and 2,2-bis-(3,5-dichloro-4-hydroxyphenyl)propane, without being limited thereto. For example, the diphenols may be 2,2-bis(4-hydroxyphenyl)propane, 2,2-bis(3,5-dichloro-4-hydroxyphenyl)propane, or 1,1-bis(4-hydroxyphenyl)cyclohexane, specifically 2,2-bis(4-hydroxyphenyl)propane, which is also referred to as bisphenol-A.

In some embodiments, the polycarbonate resin may be a branched polycarbonate resin. For example, the polycarbonate resin may be a polycarbonate resin prepared by adding a tri- or higher polyfunctional compound, specifically, a tri- or higher valent phenol group-containing compound, in an amount of about 0.05 mol% to about 2 mol% based on the total number of moles of the diphenols used in polymerization.

In some embodiments, the polycarbonate resin may be a homopolycarbonate resin, a copolycarbonate resin, or a blend thereof. In addition, the polycarbonate resin may be partly or completely replaced by an aromatic polyester-carbonate resin obtained by polymerization in the presence of an ester precursor, for example, a bifunctional carboxylic acid.

In some embodiments, the polycarbonate resin may have a weight average molecular weight (Mw) of about 10,000 g/mol to about 50,000 g/mol, for example, about 15,000 g/mol to about 40,000 g/mol, as measured by gel permeation chromatography (GPC). Within this range, the thermoplastic resin composition can have good fluidity (processability).

In some embodiments, the polycarbonate resin (B) may be present in an amount of about 30 wt% to about 60 wt%, for example, about 30 wt% to about 50 wt%, specifically about 35 wt% to about 45 wt%, based on 100 wt% of the thermoplastic resin (including the rubber-modified aromatic vinyl copolymer resin (A), the polycarbonate resin (B), and the polyester resin (C)). If the content of the polycarbonate resin is less than about 30 wt%, the thermoplastic resin composition can suffer from deterioration in flame retardancy and impact resistance, and if the content of the polycarbonate resin exceeds about 60 wt%, the thermoplastic resin composition can suffer from deterioration in fluidity and hydrolysis resistance.

(C) Polyester resin

The polyester resin according to one embodiment of the present invention may be selected from any polyester resins used in a typical thermoplastic resin composition. For example, the polyester resin may be obtained by polycondensation of a dicarboxylic acid component and a diol component, in which the dicarboxylic acid component may include: aromatic dicarboxylic acids, such as terephthalic acid (TPA), isophthalic acid (IPA), 1,2-naphthalene dicarboxylic acid, 1,4-naphthalene dicarboxylic acid, 1,5-naphthalene dicarboxylic acid, 1,6-naphthalene dicarboxylic acid, 1,7-naphthalene dicarboxylic acid, 1,8-naphthalene dicarboxylic acid, 2,3-naphthalene dicarboxylic acid, 2,6-naphthalene dicarboxylic acid, 2,7-naphthalenedicarboxylic acid, and the like; and aromatic dicarboxylates, such as dimethyl terephthalate (DMT), dimethyl isophthalate, dimethyl-1,2-naphthalate, dimethyl-1,5-naphthalate, dimethyl-1,7-naphthalate, dimethyl-1,7-naphthalate, dimethyl-1,8-naphthalate, dimethyl-2,3 -naphthalate, dimethyl-2,6-naphthalate, dimethyl-2,7-naphthalate, and the like, and in which the diol component may include ethylene glycol, 1,2-propylene glycol, 1,3-propylene glycol, 2,2-dimethyl-1,3-propanediol, 1,3-butanediol, 1,4-butanediol, 1,5-pentanediol, 1,5-pentanediol, 1,6-hexanediol, and cycloalkylene diol.

In some embodiments, the polyester resin may include at least one of polyethylene terephthalate (PET), polybutylene terephthalate (PBT), polyethylene naphthalate (PEN), polytrimethylene terephthalate (PTT), and polycyclohexylene terephthalate (PCT).

In some embodiments, the polyester resin may have an inherent viscosity [$\eta$] of about 0.5 dl/g to about 1.5 dl/g, for example, about 0.6 dl/g to about 1.3 dl/g, as measured using o-chloro phenol as a solvent at 25°C. Within this range, the thermoplastic resin composition can exhibit good flame retardancy and mechanical properties.

In some embodiments, the polyester resin (C) may be present in an amount of about 5 wt% to about 25 wt%, for example, about 7 wt% to about 22 wt%, specifically about 10 wt% to about 20 wt%, based on 100 wt% of the thermoplastic resin (including the rubber-modified aromatic vinyl copolymer resin (A), the polycarbonate resin (B), and the polyester resin (C)). If the content of the polyester resin is less than about 5 wt%, the thermoplastic resin composition can suffer from deterioration in flame retardancy, fluidity (processability), and the like, and if the content of the polyester resin exceeds about 25 wt%, the thermoplastic resin composition can suffer from deterioration in impact resistance, hydrolysis resistance, and the like.

(D) Zinc oxide

According to the present invention, zinc oxide may be used together with a particular phosphite compound to improve hydrolysis resistance, impact resistance, flame retardancy, and property balance of the thermoplastic resin

composition, and may be selected from any zinc oxide used in a typical thermoplastic resin composition.

In some embodiments, the zinc oxide may have an average particle diameter (D50) of about 0.2 μm to about 3 μm, for example, about 0.5 μm to about 3 μm, as measured in a single particle state (not forming a secondary particle through agglomeration of particles) using a particle size analyzer (Laser Diffraction Particle Size Analyzer LS 13 320, Beckman Coulter Co., Ltd.). In addition, the zinc oxide may have a BET specific surface area of about 1 $m^2/g$ to about 10 $m^2/g$, for example, about 1 $m^2/g$ to about 7 $m^2/g$, as measured by a nitrogen gas adsorption method using a BET analyzer (Surface Area and Porosity Analyzer ASAP 2020, Micromeritics Co., Ltd.), and a purity of about 99% or more. Within this range, the thermoplastic resin composition can have good discoloration resistance, bacterial resistance, and the like.

In some embodiments, the zinc oxide may have various shapes, for example, a spherical shape, a plate shape, a rod shape, and combinations thereof.

In some embodiments, the zinc oxide (D) may be present in an amount of about 0.1 to about 5 parts by weight, for example, about 0.2 to about 4 parts by weight, specifically about 0.5 to about 2 parts by weight, relative to 100 parts by weight of the thermoplastic resin (including the rubber-modified aromatic vinyl copolymer resin (A), the polycarbonate resin (B), and the polyester resin (C)). If the content of the zinc oxide is less than about 0.1 parts by weight relative to about 100 parts by weight of the thermoplastic resin, the thermoplastic resin composition can suffer from deterioration in hydrolysis resistance, impact resistance, and the like, and if the content of the zinc oxide exceeds about 5 parts by weight, the thermoplastic resin composition can suffer from deterioration in impact resistance, flame retardancy, hydrolysis resistance, and the like.

(E) Phosphite compound

According to the present invention, the phosphite compound may be used together with zinc oxide to improve hydrolysis resistance, impact resistance, flame retardancy, and property balance of the thermoplastic resin composition, and may be a phosphite compound represented by Formula 1 and/or a phosphite compound represented by Formula 2.

[Formula 1]

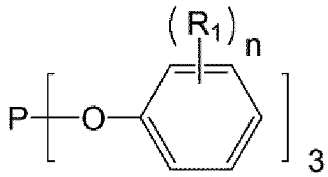

where $R_1$ is a linear or branched $C_1$ to $C_{10}$ alkyl group and n is an integer of 1 to 5, for example, an integer of 2 to 4. Here, at least one $R_1$ may be a branched alkyl group, for example, a tert-butyl group.

[Formula 2]

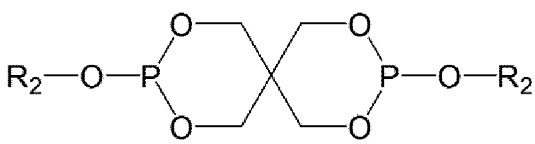

where $R_2$ is a linear or branched $C_{10}$ to $C_{30}$ alkyl group, for example, a linear $C_{15}$ to $C_{25}$ alkyl group, or a $C_6$ to $C_{30}$ aryl group, for example, a phenyl group substituted with a linear or branched $C_1$ to $C_4$ alkyl group.

In some embodiments, the phosphite compound may include at least one of a compound represented by Formula 1a, a compound represented by Formula 2a, and a compound represented by Formula 2b.

[Formula 1a]

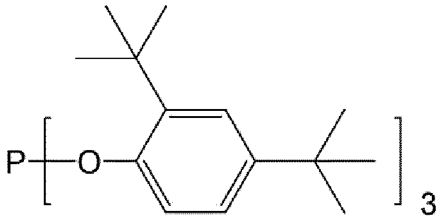

[Formula 2a]

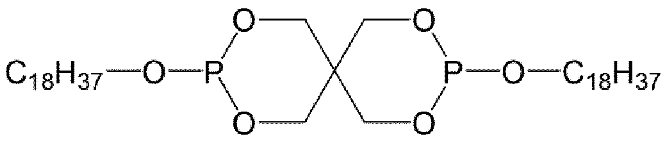

[Formula 2b]

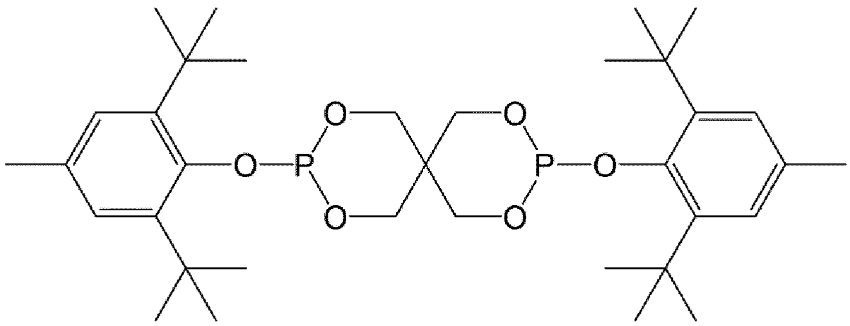

In some embodiments, the phosphite compound (E) may be present in an amount of about 0.1 to about 3 parts by weight, for example, about 0.1 to about 2 parts by weight, specifically about 0.2 to about 1.5 parts by weight, based on 100 parts by weight of the thermoplastic resin (including the rubber-modified aromatic vinyl copolymer resin (A), the polycarbonate resin (B), and the polyester resin (C)). If the content of the phosphite compound is less than about 0.1 parts by weight relative to about 100 parts by weight of the thermoplastic resin, the thermoplastic resin composition can suffer from deterioration in hydrolysis resistance, impact resistance, and the like, and if the content of the phosphite compound exceeds about 3 parts by weight, the thermoplastic resin composition can suffer from deterioration in hydrolysis resistance, impact resistance, and the like

In some embodiments, the zinc oxide (D) and the phosphite compound (E) may be present in a weight ratio (D:E) of about 1:1 to about 10:1, for example, about 1:1 to about 4:1. Within this range, the thermoplastic resin composition can exhibit better properties in terms of hydrolysis resistance, impact resistance, flame retardancy, and property balance therebetween.

(E) Phosphorus flame retardant

The phosphorus flame retardant according to one embodiment of the present invention may be a phosphorus flame retardant used in typical thermoplastic resin compositions. For example, the phosphorus flame retardant may include a phosphate compound, a phosphonate compound, a phosphinate compound, a phosphine oxide compound, a phosphazene compound, and metal salts thereof. These compounds may be used alone or as a mixture thereof.

In some embodiments, the phosphorus flame retardant may include an aromatic phosphoric ester compound represented by Formula 3.

[Formula 3]

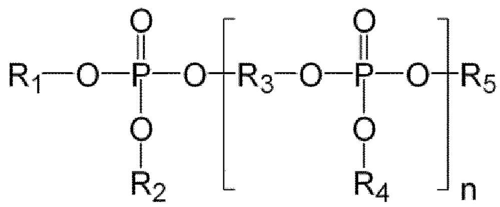

where $R_1$, $R_2$, $R_4$, and $R_5$ are each independently a hydrogen atom, a $C_6$ to $C_{20}$ (6 to 20 carbon atoms) aryl group, or a $C_1$ to $C_{10}$ alkyl group-substituted $C_6$ to $C_{20}$ aryl group; $R_3$ is a $C_6$ to $C_{20}$ arylene group or a $C_1$ to $C_{10}$ alkyl group-substituted $C_6$ to $C_{20}$ arylene group, for example, derivatives of a dialcohol, such as resorcinol, hydroquinone, bisphenol-A, or bisphenol-S; and n is an integer of 0 to 10, for example, 0 to 4.

When n is 0 in Formula 1, examples of the aromatic phosphoric ester compound may include diaryl phosphates such as diphenyl phosphate, triphenyl phosphate, tricresyl phosphate, trixylenyl phosphate, tri(2,6-dimethylphenyl) phosphate, tri(2,4,6-trimethylphenyl) phosphate, tri(2,4-di-tert-butylphenyl) phosphate, and tri(2,6-dimethylphenyl) phosphate; when n is 1 in Formula 1, examples of the aromatic phosphoric ester compound may include bisphenol-A bis(diphenyl phosphate), resorcinol bis(diphenyl phosphate), resorcinol bis[bis(2,6-dimethylphenyl)phosphate], resorcinol bis[bis(2,4-di-tert-butylphenyl) phosphate], hydroquinone bis[bis(2,6-dimethylphenyl)phosphate], hydroquinone bis(diphenyl phosphate), and hydroquinone bis[bis(2,4-di-tert-butylphenyl)phosphate]; and when n is 2 or more in Formula 1, the aromatic phosphoric ester compound may be an oligomer type phosphoric acid ester compound, without being limited thereto. These compounds may be used alone or as a mixture thereof.

In some embodiments, the phosphorus flame retardant (F) may be present in an amount of about 5 to about 30 parts by weight, for example, about 7 to about 20 parts by weight, specifically about 9 to about 18 parts by weight, relative to 100 parts by weight of the thermoplastic resin (including the rubber-modified aromatic vinyl copolymer resin (A), the polycarbonate resin (B), and the polyester resin (C)). If the content of the phosphorus flame retardant is less than about 5 parts by weight relative to about 100 parts by weight of the thermoplastic resin, the thermoplastic resin composition can suffer from deterioration in flame retardancy, fluidity, and the like, and if the content of the phosphorus flame retardant exceeds about 30 parts by weight, the thermoplastic resin composition can suffer from deterioration in impact resistance and the like.

The thermoplastic resin composition according to one embodiment of the present invention may further include flame retardants, such as a halogen flame retardant, an antimony flame retardant, and a combination thereof, other than the phosphorus flame retardant, to achieve further improvement in flame retardancy and the like.

In some embodiments, the halogen flame retardant may include decabromodiphenyl oxide, decabromodiphenyl ethane, decabromodiphenyl ether, tetrabromobisphenol A, tetrabromobisphenol A-epoxy oligomer, brominated epoxy oligomer, octabromotrimethyl phenyldindane, ethylene bistetrabromophthal imide, 2,4,6-tris(2,4,6-tribromophenoxy)-1,3,5-triazine, and the like, and the antimony flame retardant may include antimony trioxide, antimony pentoxide, and the like. These may be used alone or as a mixture thereof.

In some embodiments, the flame retardant other than the phosphorus flame retardant may be present in an amount of about 5 to about 20 parts by weight, for example, about 7 to about 10 parts by weight, relative to about 100 parts by weight of the thermoplastic resin(rubber-modified aromatic vinyl copolymer resin(A), polycarbonate resin(B) and polyester resin(C)). Within this range, the thermoplastic resin composition can exhibit good flame retardancy.

The thermoplastic resin composition according to one embodiment of the present invention may further include additives used for typical thermoplastic resin compositions. Examples of the additives may include anti-dripping agents, such as fluorinated olefin resins and the like, lubricants, nucleating agents, stabilizers, release agents, pigments, dyes, and mixtures thereof, without being limited thereto. The additives may be present in an amount of about 0.001 to about 40 parts by weight, for example, about 0.1 to about 10 parts by weight, relative to about 100 parts by weight of the thermoplastic resin.

The thermoplastic resin composition according to one embodiment of the present invention may be prepared in pellet form by mixing the aforementioned components, followed by melt extrusion at about 200°C to about 280°C, for example, about 220°C to about 250°C, using a typical twin-screw extruder.

In some embodiments, the thermoplastic resin composition may have a flame retardancy of 5VA, as measured on an injection-molded 2.5 mm thick specimen by a UL-94 vertical test method.

In some embodiments, the thermoplastic resin composition may have a flame retardancy of 5VA, as measured on an injection-molded 2.5 mm thick specimen by a UL-94 vertical test method after the specimen is exposed in a chamber under conditions of 70°C and 95% RH for 300 hours and is left for aging under conditions of room temperature and 50% RH for 24 hours.

In some embodiments, the thermoplastic resin composition may have a notched Izod impact strength of about 20 kgf·cm/cm to about 60 kgf·cm/cm, for example, about 30 kgf·cm/cm to about 50 kgf·cm/cm, as measured on a 1/8" thick specimen in accordance with ASTM D256.

In some embodiments, the thermoplastic resin composition may have an impact strength retention rate of about 85% or more, for example, about 90% to about 99%, as calculated according to Equation 1.

[Equation 1]

$$\text{Impact strength retention rate}(\%) = (IZ_1 / IZ_0) \times 100$$

where IZo denotes a notched Izod impact strength, as measured on a 1/8" thick specimen in accordance with ASTM D256, and $IZ_1$ denotes a notched Izod impact strength, as measured on the specimen in accordance with ASTM D256 after the specimen is exposed in a chamber under conditions of 70°C and 95% RH for 300 hours and is left for aging under conditions of room temperature and 50% RH for 24 hours.

A molded article according to the present invention is produced from the thermoplastic resin composition set forth above. The thermoplastic resin composition may be prepared in pellet form. The prepared pellets may be produced into various molded articles (products) by various molding methods, such as injection molding, extrusion molding, vacuum molding, and casting. These molding methods are well known to those skilled in the art. The molded product has good properties in terms of hydrolysis resistance, flame retardancy, impact resistance, and property balance therebetween, and thus can be advantageously used for interior/exterior materials for electrical/electronic products, interior/exterior materials for vehicles, exterior materials for buildings, and the like.

[Mode for Invention]

Next, the present invention will be described in more detail with reference to some examples. It should be understood that these examples are provided for illustration only and are not to be construed in any way as limiting the invention.

## EXAMPLE

Details of components used in Examples and Comparative Examples are as follows.

(A) Rubber-modified aromatic vinyl copolymer resin

A mixture of 23 wt% of (A1) a rubber-modified aromatic vinyl copolymer resin and 77 wt% of (B2) an aromatic vinyl copolymer resin was used.

(A1) Rubber-modified vinyl graft copolymer

A core-shell type graft copolymer (g-ABS) obtained through graft copolymerization of 42 wt% of styrene and acrylonitrile (styrene/acrylonitrile: 75 wt%/25 wt%) to 58 wt% of butadiene rubbers having an average particle diameter of 0.3 μm was used.

(A2) Aromatic vinyl copolymer resin

A resin (weight average molecular weight: 135,000 g/mol) prepared through polymerization of 72 wt% of styrene and 28 wt% of acrylonitrile was used.

(B) Polycarbonate resin

A bisphenol-A type polycarbonate resin having a weight average molecular weight (Mw) of 22,000 g/mol was used.

(C) Polyester resin

Polyethylene terephthalate (PET) having an inherent viscosity [η] of about 1.0 dl/g as measured using o-chloro phenol at 25°C was used.

(D) Metal oxide

(D1) A primary intermediate was obtained by melting zinc solids and heating the molten zinc to 900°C to vaporize the molten zinc, followed by injecting oxygen gas and cooling the vaporized zinc to room temperature (25°C). Next, the primary intermediate was subjected to heat treatment at 700°C for 90 minutes and cooled to room temperature (25°C), thereby preparing zinc oxide.
(D2) Magnesium oxide (Manufacturer: KYOWA, Product Name: KYOWAMAG 150) was used.

(E) Phosphite compound

(E1) A phosphite compound represented by Formula 1a was used.

[Formula 1a]

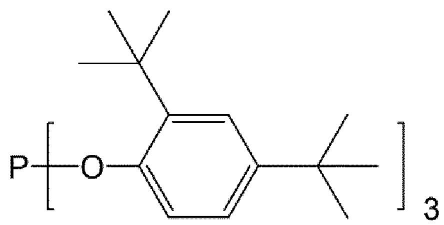

(E2) A phosphite compound represented by Formula 2a was used.

[Formula 2a]

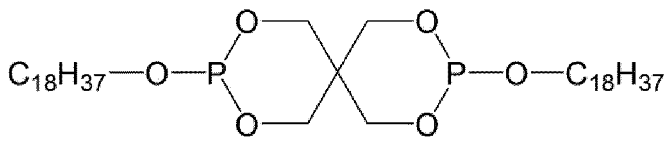

(E3) A phosphite compound represented by Formula 2b was used.

[Formula 2b]

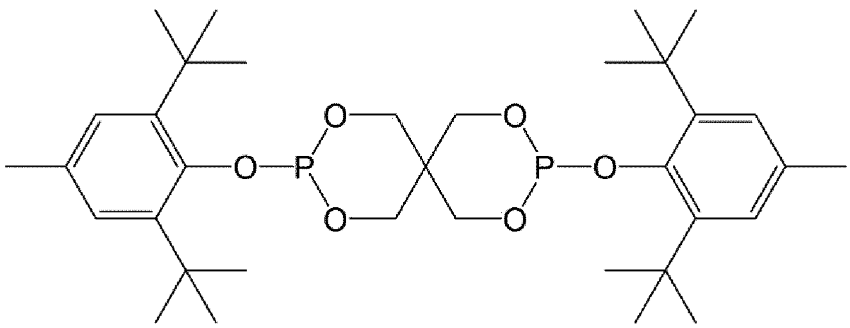

(E4) Diphenyl-isooctyl-phosphite (Manufacturer: Kolong Industries Co., Ltd., Product Name: KP-1406) was used.
(F) Phosphorus flame retardant
Oligomer type bisphenol-A diphosphate (Manufacturer: Yoke Chemical, Product Name: YOKE BDP) was used.
(G) Halogen flame retardant
Bromine-based flame retardant (2,4,6-tris(2,4,6-tribromophenoxy)-1,3,5-triazine, Manufacturer: ICL Industrial, Product Name: FR-245) was used.

**Examples 1 to 10 and Comparative Examples 1 to 10**

The above components were mixed in amounts as listed in Tables 1 and 2 and subjected to extrusion at 230°C, thereby preparing pellets. Here, extrusion was performed using a twin-screw extruder (L/D=36, Φ: 45 mm) and the prepared pellets were dried at 80°C for 2 hours or more and injection-molded in a 6 oz. injection molding machine (molding temperature: 230°C, mold temperature: 60°C), thereby preparing specimens. The specimens were evaluated as to the following properties by the following method, and results are shown in Tables 1 and 2.

Property Measurement

(1) Flame retardancy: Flame retardancy was measured on an injection-molded 1.5 mm thick specimen by a UL-94 vertical test method.
(2) Flame retardancy after high temperature/high humidity treatment: Flame retardancy was measured on an injection-molded 2.5 mm thick specimen by a UL-94 vertical test method after the specimen was exposed in a chamber under conditions of 70°C and 95% RH for 300 hours and was left for aging under conditions of room temperature and 50% RH for 24 hours.
(3) Notched Izod impact resistance (kgf·cm/cm): Notched Izod impact strength was measured on a 1/8" thick specimen in accordance with ASTM D256.
(4) Impact strength retention rate (unit: %): Hydrolysis resistance was evaluated based on an impact strength retention rate of an injection molded specimen calculated according to Equation 1:

[Equation 1]

$$\text{Impact strength retention rate(\%)} = (IZ_1 / IZ_0) \times 100$$

where IZo denotes a notched Izod impact strength, as measured on an injection molded 1/8" thick specimen in accordance with ASTM D256, and $IZ_1$ denotes a notched Izod impact strength, as measured on the specimen in accordance with ASTM D256 after the specimen is exposed in a chamber under conditions of 70°C and 95% RH for 300 hours and is left for aging under conditions of room temperature and 50% RH for 24 hours.

Table 1

| | Example | | | | | | | | | |
|---|---|---|---|---|---|---|---|---|---|---|
| | 1 | 2 | 3 | 4 | 5 | 6 | 7 | 8 | 9 | 10 |
| (A) (wt%) | 50 | 45 | 40 | 50 | 45 | 40 | 45 | 45 | 45 | 42 |
| (B) (wt%) | 40 | 40 | 40 | 40 | 40 | 40 | 40 | 40 | 40 | 40 |
| (C) (wt%) | 10 | 15 | 20 | 10 | 15 | 20 | 15 | 15 | 15 | 18 |
| (D1) (parts by weight) | 0.5 | 0.5 | 0.5 | 2 | 2 | 2 | 1.3 | 1.3 | 1.3 | 1.3 |
| (D2) (parts by weight) | - | - | - | - | - | - | - | - | - | - |
| (E1) (parts by weight) | 0.5 | 0.5 | 0.5 | 0.5 | 0.5 | 0.5 | 0.5 | - | - | 0.5 |
| (E2) (parts by weight) | - | - | - | - | - | - | - | 0.5 | - | - |
| (E3) (parts by weight) | - | - | - | - | - | - | - | - | 0.5 | |
| (E4) (parts by weight) | - | - | - | - | - | - | - | - | - | - |
| (F) (parts by weight) | 10 | 10 | 10 | 10 | 10 | 10 | 10 | 10 | 10 | 15 |
| (G) (parts by weight) | 7 | 7 | 7 | 7 | 7 | 7 | 7 | 7 | 7 | - |
| Flame retardancy after high temperature/high humidity treatment | 5VA | 5VA | 5VA | 5VA | 5VA | 5VA | 5VA | 5VA | 5VA | 5VA |
| Flame retardancy | 5VA | 5VA | 5VA | 5VA | 5VA | 5VA | 5VA | 5VA | 5VA | 5VA |

(continued)

| | Example | | | | | | | | | |
|---|---|---|---|---|---|---|---|---|---|---|
| | 1 | 2 | 3 | 4 | 5 | 6 | 7 | 8 | 9 | 10 |
| Notched Izod impact strength ($IZ_0$) | 41 | 40 | 38 | 35 | 35 | 33 | 37 | 37 | 37 | 30 |
| Notched Izod impact strength ($IZ_1$) | 37.3 | 36.4 | 34.2 | 34 | 33.2 | 35.5 | 35.2 | 36.0 | 35.8 | 27.5 |
| Impact strength retention rate (%) | 91 | 91 | 90 | 97 | 95 | 93 | 95 | 97 | 97 | 92 |

Table 2

| | Comparative Example | | | | | | | | | |
|---|---|---|---|---|---|---|---|---|---|---|
| | 1 | 2 | 3 | 4 | 5 | 6 | 7 | 8 | 9 | 10 |
| (A) (wt%) | 25 | 65 | 45 | 45 | 45 | 45 | 45 | 45 | 45 | 45 |
| (B) (wt%) | 40 | 34 | 40 | 40 | 40 | 40 | 40 | 40 | 40 | 40 |
| (C) (wt%) | 35 | 1 | 15 | 15 | 15 | 15 | 15 | 15 | 15 | 15 |
| (D1) (parts by weight) | 1.3 | 1.3 | - | 0.05 | 6 | - | 1.3 | 1.3 | 1.3 | 1.3 |
| (D2) (parts by weight) | - | - | - | - | - | 1.3 | - | - | - | - |
| (E1) (parts by weight) | 0.5 | 0.5 | 0.5 | 0.5 | 0.5 | 0.5 | - | 0.05 | 4 | - |
| (E2) (parts by weight) | - | - | - | - | - | - | - | - | - | - |
| (E3) (parts by weight) | - | - | - | - | - | - | - | - | - | - |
| (E4) (parts by weight) | - | - | - | - | - | - | - | - | - | 0.5 |
| (F) (parts by weight) | 10 | 10 | 10 | 10 | 10 | 10 | 10 | 10 | 10 | 10 |
| (G) (parts by weight) | 7 | 7 | 7 | 7 | 7 | 7 | 7 | 7 | 7 | 7 |
| Flame retardancy | 5VA | Fail | 5VA | 5VA | Fail | 5VA | 5VA | 5VA | 5VA | 5VA |
| Flame retardancy after high temperature/high humidity treatment | 5VA | Fail | Fail | Fail | Fail | Fail | Fail | Fail | 5VA | Fail |
| Notched Izod impact strength ($IZ_0$) | 7 | 45 | 12 | 17 | 22 | 13 | 32 | 31 | 25 | 29 |
| Notched Izod impact strength ($IZ_1$) | 2 | 42 | 2.5 | 3 | 19 | 2.5 | 10 | 11 | 19 | 8 |
| Impact strength retention rate (%) | 29 | 93 | 20 | 18 | 86 | 19 | 31 | 35 | 76 | 28 |

From the result, it could be seen that the thermoplastic resin compositions according to the present invention had good properties in terms of hydrolysis resistance (flame retardancy after high temperature/high humidity treatment, impact strength retention rate), flame retardancy, impact resistance, and balance therebetween

On the contrary, it could be seen that the resin composition of Comparative Example 1 prepared using an insufficient amount of the rubber-modified aromatic vinyl copolymer resin and an excess of the polyester resin suffered from deterioration in impact resistance, hydrolysis resistance (impact strength retention rate), and the like, and that the resin composition of Comparative Example 2 prepared using an excess of the rubber-modified aromatic vinyl copolymer resin and an insufficient amount of the polyester resin suffered from deterioration in flame retardancy, hydrolysis resistance (flame retardancy after high temperature/high humidity treatment), and the like. It could be seen that: the resin composition of Comparative Example 3 not using zinc oxide and the resin composition of Comparative Example 4 prepared using an insufficient amount of zinc oxide suffered from deterioration in impact resistance, hydrolysis resistance (flame retardancy after high temperature/high humidity treatment and impact strength retention rate), and the like; the resin composition of Comparative Example 5 prepared using an excess of zinc oxide suffered from deterioration in flame retardancy, hydrolysis resistance (flame retardancy after high temperature/high humidity treatment), and the like; the

resin composition of Comparative Example 6 prepared using magnesium oxide (D2) instead of zinc oxide suffered from deterioration in impact resistance, hydrolysis resistance (flame retardancy after high temperature/high humidity treatment and impact strength retention rate), and the like; and the resin composition of Comparative Example 7 free from the phosphite compound according to the present invention and the resin composition of Comparative Example 8 containing an insufficient amount of the phosphite compound according to the present invention suffered from deterioration in hydrolysis resistance (flame retardancy after high temperature/high humidity treatment and impact strength retention rate) and the like. It could be seen that the resin composition of Comparative Example 9 containing an excess of the phosphite compound according to the present invention suffered from deterioration in hydrolysis resistance (impact strength retention rate) and the like, and the resin composition of Comparative Example 10 prepared using diphenyl-isooctyl-phosphite (E4) instead of the phosphite compound according to the present invention suffered from deterioration in hydrolysis resistance (flame retardancy after high temperature/high humidity treatment and impact strength retention rate) and the like.

It should be understood that various modifications, changes, alterations, and equivalent embodiments can be made by those skilled in the art without departing from the spirit and scope of the present invention.

## Claims

1. A thermoplastic resin composition comprising:

   about 100 parts by weight of a thermoplastic resin comprising about 30 wt% to about 60 wt% of a rubber-modified aromatic vinyl copolymer resin, about 30 wt% to about 60 wt% of a polycarbonate resin, and about 5 wt% to about 25 wt% of a polyester resin;
   about 0.1 to about 5 parts by weight of zinc oxide;
   about 0.1 to about 3 parts by weight of a phosphite compound comprising at least one of a phosphite compound represented by Formula 1 and a phosphite compound represented by Formula 2; and
   about 5 to about 30 parts by weight of a phosphorus flame retardant.

   [Formula 1]

   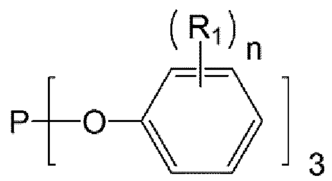

   where $R_1$ is a linear or branched $C_1$ to $C_{10}$ alkyl group and n is an integer of 1 to 5;

   [Formula 2]

   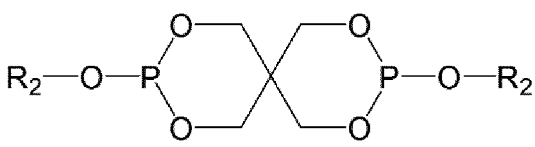

   where $R_2$ is a linear or branched $C_{10}$ to $C_{30}$ alkyl group or a $C_6$ to $C_{30}$ aryl group.

2. The thermoplastic resin composition according to claim 1, wherein the rubber-modified aromatic vinyl copolymer resin comprises a rubber-modified vinyl graft copolymer and an aromatic vinyl copolymer resin.

3. The thermoplastic resin composition according to claim 2, wherein the rubber-modified vinyl graft copolymer is prepared through graft polymerization of a monomer mixture comprising an aromatic vinyl monomer and a vinyl cyanide monomer to a rubber polymer.

4. The thermoplastic resin composition according to any one of claims 1 to 3, wherein the polyester resin comprises at least one of polyethylene terephthalate (PET), polybutylene terephthalate (PBT), polyethylene naphthalate (PEN),

polytrimethylene terephthalate (PTT), and polycyclohexylene terephthalate (PCT).

5. The thermoplastic resin composition according to any one of claims 1 to 4, wherein the phosphite compound comprises at least one of a compound represented by Formula 1a, a compound represented by Formula 2a, and a compound represented by Formula 2b.

[Formula 1a]

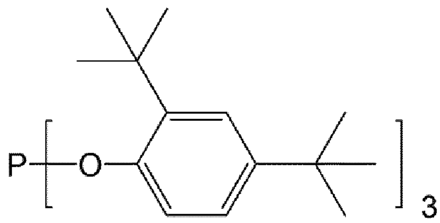

[Formula 2a]

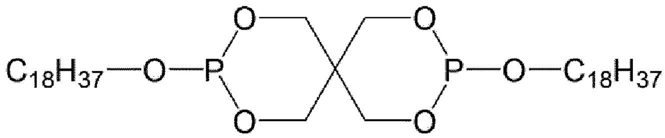

[Formula 2b]

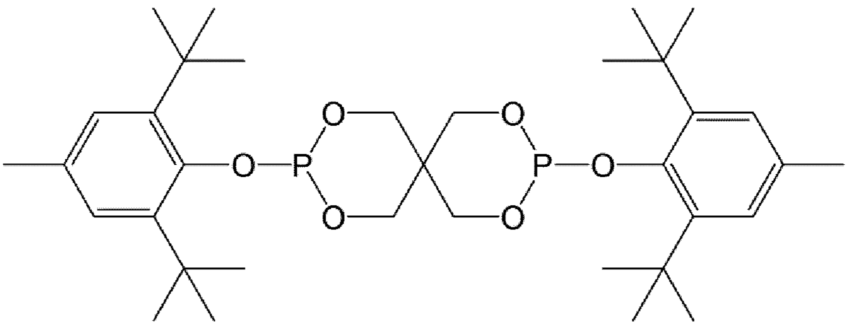

6. The thermoplastic resin composition according to any one of claims 1 to 5, wherein the phosphorus flame retardant comprises at least one of a phosphate compound, a phosphonate compound, a phosphinate compound, a phosphine oxide compound, and a phosphazene compound.

7. The thermoplastic resin composition according to any one of claims 1 to 6, further comprising: at least one of a halogen flame retardant and an antimony flame retardant.

8. The thermoplastic resin composition according to any one of claims 1 to 7, wherein the zinc oxide and the phosphite compound are present in a weight ratio of about 1:1 to about 4:1.

9. The thermoplastic resin composition according to any one of claims 1 to 8, wherein the thermoplastic resin composition has a flame retardancy of 5VA, as measured on an injection-molded 2.5 mm thick specimen by a UL-94 vertical test method.

10. The thermoplastic resin composition according to any one of claims 1 to 9, wherein the thermoplastic resin composition has a flame retardancy of 5VA, as measured on an injection-molded 2.5 mm thick specimen by a UL-94 vertical test method after the specimen is exposed in a chamber under conditions of 70°C and 95% RH (relative humidity) for 300 hours and is left for aging under conditions of room temperature and 50% RH for 24 hours.

11. The thermoplastic resin composition according to any one of claims 1 to 10, wherein the thermoplastic resin composition has a notched Izod impact strength of about 20 kgf·cm/cm to about 60 kgf·cm/cm, as measured on a 1/8" thick specimen in accordance with ASTM D256.

**12.** The thermoplastic resin composition according to any one of claims 1 to 11, wherein the thermoplastic resin composition has an impact strength retention rate of about 85% or more, as calculated by Equation 1:
[Equation 1]

$$\text{Impact strength retention rate (\%)} = (IZ_1/IZ_0) \times 100$$

where IZo denotes a notched Izod impact strength, as measured on an injection-molded 1/8" thick specimen in accordance with ASTM D256, and $IZ_1$ denotes a notched Izod impact strength, as measured on the specimen in accordance with ASTM D256 after the specimen is exposed in a chamber under conditions of 70°C and 95% RH for 300 hours and is left for aging under conditions of room temperature and 50% RH for 24 hours.

**13.** A molded article produced from the thermoplastic resin composition according to any one of claims 1 to 12.

**INTERNATIONAL SEARCH REPORT**

International application No.
**PCT/KR2019/017783**

A. CLASSIFICATION OF SUBJECT MATTER
***C08L 69/00(2006.01)i, C08L 55/02(2006.01)i, C08L 25/10(2006.01)i, C08L 67/02(2006.01)i, C08F 285/00(2006.01)i, C08F 279/02(2006.01)i, C08K 3/22(2006.01)i, C08K 5/49(2006.01)i, C08K 5/524(2006.01)i***
According to International Patent Classification (IPC) or to both national classification and IPC

B. FIELDS SEARCHED

Minimum documentation searched (classification system followed by classification symbols)
C08L 69/00; C08G 64/16; C08K 13/02; C08K 3/24; C08K 5/50; C08K 5/53; C08L 001/00; C08L 23/12; C08L 25/12; C08L 67/02; C08L 9/06; C08L 55/02; C08L 25/10; C08F 285/00; C08F 279/02; C08K 3/22; C08K 5/49; C08K 5/524

Documentation searched other than minimum documentation to the extent that such documents are included in the fields searched
Korean utility models and applications for utility models: IPC as above
Japanese utility models and applications for utility models: IPC as above

Electronic data base consulted during the international search (name of data base and, where practicable, search terms used)
eKOMPASS (KIPO internal), STN (Registry, Caplus) & Keywords: thermoplastic resin, polycarbonate, polyester, phosphite

C. DOCUMENTS CONSIDERED TO BE RELEVANT

| Category* | Citation of document, with indication, where appropriate, of the relevant passages | Relevant to claim No. |
|---|---|---|
| X | US 2015-0322252 A1 (ROBERT, Arechederra et al.) 12 November 2015<br>See claims 1, 2, 15, 21, 24, 25; paragraphs [0014]-[0016], [0030]-[0050], [0086], [0091], [0093], [0127], [0215], [0225]-[0245]. | 1-4 |
| X | US 2004-0249030 A1 (WILLIAM PALMER, Enlow et al.) 09 December 2004<br>See claims 13, 16-19, 22, 26; paragraphs [0012]-[0022], [0031], [0055], [0059]. | 1-4 |
| Y | JP 08-041305 A (GENERAL ELECTRIC COMPANY) 13 February 1996<br>See claims 1, 14-19; paragraphs [0032], [0052], [0055]. | 1-4 |
| Y | KR 10-2016-0079786 A (SABIC GLOBAL TECHNOLOGIES B.V.) 06 July 2016<br>See claims 13, 16-19. | 1-4 |
| Y | KR 10-2008-0032487 A (LG CHEM, LTD.) 15 April 2008<br>See claim 1; example 1. | 1-4 |
| Y | KR 10-2007-0047073 A (LG CHEM, LTD.) 04 May 2007<br>See claims 1, 5. | 1-4 |

☐ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 07 APRIL 2020 (07.04.2020) | **07 APRIL 2020 (07.04.2020)** |

| Name and mailing address of the ISA/KR | Authorized officer |
|---|---|
| Korean Intellectual Property Office<br>Government Complex Daejeon Building 4, 189, Cheongsa-ro, Seo-gu, Daejeon, 35208, Republic of Korea<br>Facsimile No. +82-42-481-8578 | Telephone No. |

Form PCT/ISA/210 (second sheet) (January 2015)

**INTERNATIONAL SEARCH REPORT**

International application No.
PCT/KR2019/017783

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☒ Claims Nos.: **5-13**
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

INTERNATIONAL SEARCH REPORT
Information on patent family members

International application No.
PCT/KR2019/017783

| Patent document cited in search report | Publication date | Patent family member | Publication date |
|---|---|---|---|
| US 2015-0322252 A1 | 12/11/2015 | AR 094184 A1 | 15/07/2015 |
| | | EP 2935430 A1 | 28/10/2015 |
| | | JP 06313331 B2 | 18/04/2018 |
| | | JP 2016-501963 A | 21/01/2016 |
| | | TW I638038B | 11/10/2018 |
| | | TW 201428093 A | 16/07/2014 |
| | | US 10227482 B2 | 12/03/2019 |
| | | WO 2014-099397 A1 | 26/06/2014 |
| US 2004-0249030 A1 | 09/12/2004 | DE 112004000970 T5 | 19/10/2006 |
| | | US 07186853 B2 | 06/03/2007 |
| | | WO 2004-108735 A2 | 16/12/2004 |
| JP 08-041305 A | 13/02/1996 | EP 0676442 A1 | 11/10/1995 |
| | | JP 03469348 B2 | 25/11/2003 |
| | | SG 30332 A1 | 01/06/1996 |
| | | TW 353675 B | 01/03/1999 |
| | | US 05510398 A | 23/04/1996 |
| KR 10-2016-0079786 A | 06/07/2016 | CN 105849192 A | 10/08/2016 |
| | | CN 105849192 B | 06/11/2018 |
| | | EP 3049480 A1 | 03/08/2016 |
| | | EP 3049480 B1 | 04/12/2019 |
| | | KR 10-2018-0081834 A | 17/07/2018 |
| | | US 10030139 B2 | 24/07/2018 |
| | | US 2016-0312025 A1 | 27/10/2016 |
| | | US 2017-313876 A1 | 02/11/2017 |
| | | US 9725594 B2 | 08/08/2017 |
| | | WO 2015-065611 A1 | 07/05/2015 |
| KR 10-2008-0032487 A | 15/04/2008 | KR 10-0969454 B1 | 14/07/2010 |
| KR 10-2007-0047073 A | 04/05/2007 | KR 10-0782700 B1 | 07/12/2007 |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 5061745 A